# EUROPÄISCHE PATENTSCHRIFT

(11) **EP 0 451 086 B1**
(45) Veröffentlichungstag und Bekanntmachung des Hinweises auf die Patenterteilung: **29.11.1995**
(21) Anmeldenummer: 91710011.7
(22) Anmeldetag: 22.03.1991
(51) Int. Cl.: B01L 9/00

(54) **Stativfuss für Versuchsaufbauten**
Stand leg for experiments
Pied pour des expériences

(30) Priorität: 04.04.1990 DE 4010867
(43) Veröffentlichungstag der Anmeldung: 09.10.1991
(73) Patentinhaber: PHYWE SYSTEME GMBH, 37079 Göttingen (DE)
(72) Erfinder: Krüll, Frans, Dr., W-3400 Göttingen (DE); Oberdorfer, Dietmar, W-3400 Göttingen (DE); Plagge, Heinrich, W-3402 Dransfeld (DE); Schönfeld, Hans, W-3180 Wolfsburg 1 (DE)
(74) Vertreter: Bauer, Wulf, Dr.

(56) Entgegenhaltungen:
- CH-A- 109 793
- DE-A- 3 207 228
- GB-A- 289 574
- US-A- 1 893 799

## Beschreibung

Die Erfindung bezieht sich auf einen Stativfuß nach dem Oberbegriff des Patentanspruchs 1.

Derartige Stativfüße, siehe CH-A-109 793, bilden die Basis von mit Stativmaterial aufgebauten Versuchsaufbauten. Stativfüße bilden eine möglichst große Abstützungsfläche und haben ein ausreichendes Eigengewicht, um Versuchsaufbauten ausreichende Stabilität zu geben. Der Stativfuß der eingangs genannten Art ist im wesentlichen einstückig aus Metall hergestellt, er hat eine mittige, vertikale Bohrung für die Aufnahme einer runden oder eckigen Stange, insbesondere einer Stativstange. Diese kann durch eine Schraube in der Bohrung festgelegt werden.

Aus der US-A-1893 799 ist ein Stativfuß bekannt, der von oben gesehen die Form eines A hat. In der Mitte des Balkens des A ist die Bohrung für die Aufnahme und das Einspannen einer Stange vorgesehen. Es ist beschrieben, wie sich durch eine Klemme zwei derartige Stativfüße miteinander verbinden lassen. Weiterhin sind verschiedene geometrische Anordnungen beschrieben, bei denen eine Vielzahl der Stativfüße ohne wechselseitige Verbindung zusammengesetzt sind.

Aus der DE-A-3 207 228 ist eine längliche Halterung für Stativmaterialien bekannt. Für eine kippsichere, freistehende Anordnung müssen von ihr zumindest
immer zwei eingesetzt und durch Stangen oder sonstige, zusätzliche Teile miteinander verbunden werden.

Der Erfindung liegt die Aufgabe zugrunde, den Stativfuß der eingangs genannten Art dahingehend weiterzubilden, daß er vielseitiger einsetzbar ist, insbesondere daß Versuchsaufbauten, für die bisher zwei und mehr Stativfüße für den Aufbau benötigt wurden, mit deutlich weniger Stativfüßen realisiert werden können.

Erfindungsgemäß wird diese Aufgabe gelöst durch die Merkmale des Patentanspruchs 1.

Das besondere an diesem Stativfuß ist die Möglichkeit, ihn in zwei baugleiche Teilstücke aufzuteilen, diese können separat eingesetzt werden, wobei sie zweckmäßig durch Stativteile, vorzugsweise eine sie unmittelbar verbindende Stativstange, miteinander mechanisch verbunden sind. Aufgrund der Zweiteilung hat jedes Teilstück eine Bohrung für die Aufnahme und das Einspannen einer Stange, mithin also eine eigene Spannstelle. Dadurch können in den kompletten Stativfuß zwei vertikale Stangen unabhängig voneinander eingespannt werden.

Die Zweiteilung des erfindungsgemäßen Stativfußes ermöglicht Versuchsaufbauten in einer neuen konstruktiven Ausbildung. So kann beispielsweise eine optische Bank aufgebaut werden, in der zwei vertikal angeordnete Teilstücke durch eine Vierkant-Querstange miteinander verbunden werden, die durch die Bohrungen gesteckt und in diesen festgelegt ist.

In einer Weiterbildung der Erfindung wird vorgeschlagen, daß jedes Teilstück eine Kontaktfläche aufweist, die beim vollständigen Zusammensetzen die Kontaktfläche des anderen Teilstücks berührt, und daß von dieser Kontaktfläche als formschlüssiges Verbindungsmittel einerseits ein Zapfen vorspringt und andererseits in der Kontaktfläche eine Ausnehmung für die Aufnahme eines Zapfens des jeweils anderen Teilstücks vorgesehen ist. Dies erleichtert das Zusammensetzen der beiden Teilstücke zu einem kompletten Stativfuß. In besonders vorteilhafter Ausbildung sind die Zapfen als Hohlzapfen ausgeführt und laufen die Ausnehmungen als Durchgangsbohrungen durch. Dadurch lassen sich zwei Teilstücke mittels einer Stange miteinander verbinden und kann eine sehr breite Abstützbasis auf diese Weise ausgebildet werden. Die verbindende Stange selbst kann in bevorzugter Weiterbildung in jedem Teilstück festgeklemmt werden. Bei Versuchsaufbauten kann die verbindende Stange ihrerseits zusätzliche Aufgaben übernehmen, beispielsweise können an ihr Teile des Aufbaus befestigt werden.

Weiterhin hat sich als vorteilhaft erwiesen, eine mit einer Rastnase versehene Zunge vorzusehen, die quer zur Kontaktfläche vorsteht und mit einer Rastausnehmung zusammenwirkt. Im Zusammenhang mit den formschlüssigen Verbindungsmitteln, die als Zapfen ausgeführt sind, können dadurch beiden Teilstücke dauerhaft miteinander verbunden werden, ohne daß es zusätzlicher Hilfsmittel, beispielsweise einer Stativstange, bedarf.

In bevorzugter Ausbildung ist jedes Teilstück aus einem Körper gefertigt, der aus Kunststoff hergestellt ist und nach unten offene Kammern ausbildet. Die Kammern können schwere, das Gesamtgewicht erhöhende Stücke aufnehmen und nach unten durch Abschlußplatten verschlossen werden. Aufgrund der Herstellung aus Kunststoff im Spritzgußverfahren sind, wie ansich bekannt, keine individuellen Bearbeitungsschritte am Körper notwendig, insbesondere aber hat dieser eine für den praktischen Gebrauch wiederstandsfähige Oberfläche, so daß die Stativfüße auch nach vielmaligem Benutzen gut aussehen. Dies steht im Gegensatz zu den lackierten Stativfüßen nach dem Stand der Technik, bei deren praktischem Einsatz Gebrauchsspuren nicht zu vermeiden sind.

Schließlich hat es sich als Vorteil erwiesen, die freien Enden der Stützfüße als zylindrische Körper auszubilden, in denen zusätzlich eine zentrale Bohrung für die Aufnahme einer Stativstange ausgeführt ist. Die zylindrische Ausbildung ermöglicht es, die Teilstücke auch - wie oben beschrieben - für den Aufbau beispielsweise einer optischen Bank auf die Seite zu stellen, bei beliebiger Seitenlage wird immer eine Abstützlinie erzielt.

Weitere Vorteile und Merkmale der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung näher erläutert wird. In dieser zeigen:
Fig. 1 eine Draufsicht auf eines der beiden Teilstücke des Stativfußes,
Fig. 2 eine Seitenansicht des Teilstücks nach Fig. 1 mit Blickrichtung auf die Stützfüße,
Fig. 3 eine Untersicht auf das Teilstück,
Fig. 4 ein Schnitt entlang der Schnittlinie IV - IV in Fig. 2,
Fig. 5 ein Schnitt entlang der Schnittlinie V - V in Fig. 3,
Fig. 6 ein Schnitt entlang der Schnittlinie VI - VI in Fig. 3,
Fig. 7 eine Seitenansicht eines Klemmhebels,
Fig. 8 eine Stirnansicht einer Doppelmuffe,
Fig. 9 einen Schnitt durch die Mittelebene der Doppelmuffe nach Figur 8,
Fig. 10 eine Stirnansicht der Doppelmuffe von der anderen Stirnseite und
Fig. 11 eine Draufsicht auf die Doppelmuffe nach den Figuren 8 bis 10.

Das aus den Figuren ersichtliche Teilstück eines kompletten Stativfußes wird mit einem baugleichen Teilstück zusammengesteckt und bildet dann einen kompletten Stativfuß mit vier sternförmig wegstehenden, 90 Grad zueinander versetzten Stützarmen 20, die von einem Zentralbereich 22 quadratischer Grundform ausgehen und auf Diagonalen des quadratischen Zentralbereichs 22 verlaufen. In der konkret dargestellten Ausbildung sind die Stützarme 20 an abgestumpfte Eckbereiche eines quadratischen Zentralbereichs 22 angesetzt.

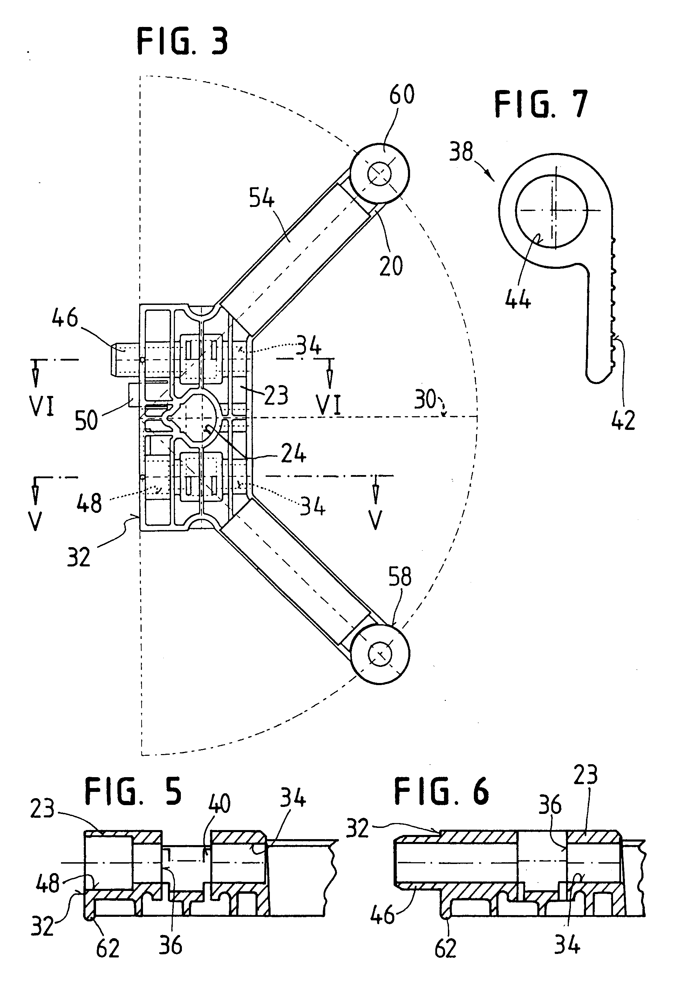

Das dargestellte Teilstück eine Stativfußes wird im wesentlichen durch einen Körper aus Kunststoff (Durethan) gebildet, der im Spritzgußverfahren hergestellt ist. Er bildet einen halben Zentralbereich 23 und zwei Stützarme 20 aus, hat eine nach oben und zu den Seitenflächen hin geschlossene Oberfläche, ist aber nach unten hin kammerartig offen, wie insbesondere Fig. 3 und auch Fig. 4 zeigen. Dieser Körper bildet eine etwa in der Mitte des halben Zentralbereichs 22 vorgesehene und quer zu dessen Hauptebene verlaufende Bohrung 24, die in bekannter Weise einen teilweise V-förmigen, teilweise halbrunden Querschnitt aufweist. Ihr ist eine Spannschraube 26 als separates Teil zugeordnet, hierzu ist im Körper eine Gewindebohrung 28 ausgebildet, die die Bohrung 24 schräg schneidet. In einer bevorzugten Ausbildung ist diese Gewindebohrung 28 als Metalleinsatz mit Innengewinde ausgeführt, der mit dem Körper vorzugsweise durch Ultraschallschweißen verbunden ist.

Der Körper ist im wesentlichen, bis auf im folgenden zu besprechende Ausnahmen, symmetrisch zu einer Symmetrieebene 30 ausgebildet. Sie steht im rechten Winkel zu einer Kontaktfläche 32 die, wie auch die sonstigen, geschlossenen Begrenzungsflächen des halben Zentralbereichs 23, eben ausgeführt ist. Beim Zusammensetzen zweier Teilstücke berühren sich diese im Bereich ihrer Kontaktflächen 32.

Quer zur Kontaktfläche 32 verlaufen symmetrisch zur Symmetrieebene 30 zwei Durchgangsbohrungen 34, die durch rohrförmige Körper begrenzt sind, welche aus den Figuren 3, 5 und 6 ersichtlich sind. Die Durchgangsbohrungen 34 haben ein lichtes Mindestmaß von 10,2 mm und sind daher für die Aufnahme von Stativstangen geeignet. Im Mittelbereich befindet sich eine Aussparung 36, dort ist die Durchgangsbohrung 34 zur Oberseite des Körpers hin offen. Hier wird jeweils ein exzentrischer Klemmhebel 38 einesetzt, er ist aus Fig. 7 ersichtlich. Um ihn in der Durchgangsbohrung zu halten, sind kleine Klemmnasen 40 vorgesehen. Im eingeschwenkten Zustand ist die außenliegende Oberseite 42 des Klemmhebels 38 im wesentlichen bündig mit der Oberseite des Körpers. In diesem Fall ist auch das Exzenterloch 44 des Klemmhebels 38 gleichachsig mit der Durchgangsbohrung 34. Durch Hochschwenken eine Handhabe des Klemmhebels 38 verschiebt sich das Exzenterloch 44 zunehmend gegenüber der Durchgangsbohrung 34, so daß eine eingelegte 10 mm Stange zunehmend festgeklemmt wird.

Eine Durchgangsbohrung 34 pro Teilstück springt gegenüber der Kontaktfläche 32 um einige Millimeter vor und bildet einen Zapfen 46, während die andere Durchgangsbohrung 34 eine diesem Zapfen formmäßig angepaßte Erweiterung 48 hat, die von der Kontaktfläche 32 in den halben Zentralbereich 23 hineinreicht. Beim Zusammenfügen zweier Teilstücke zu einem kompletten Stativfuß wird der jeweilige Zapfen 46 eines Teilstücks in die Erweiterung 48 eingeschoben, wodurch eine exakte Zuordnung der beiden Teilstücke zueinander erhalten wird. Bei vollständigem Zusammenschieben der beiden Teilstücke rastet noch ein an einer vorspringenden Zunge 50, die einstückig mit dem Körper verbunden ist, vorspringender Rastzahn in eine Ausnehmung 52 auf der Oberseite des Körpers, Zunge 50 und Ausnehmung 52 sind gleichabständig zur Symmetrieebene 30 angeordnet. Diese beiden Teile und der Zapfen 46 bzw. die Erweiterung 48 sind die einzigen Abweichungen von der oben genannten Symmetrie.

Auch die Stützarme 20 haben vom Körper her ein U-Profil, im fertigen Teilstück ist die nach unten offene Seite jedoch durch eine Platte 54 verschlossen. Dadurch wird ein Gewicht liefernder Block 56 aus Rundmaterial klapperfrei eingeschlossen (Fig. 4).

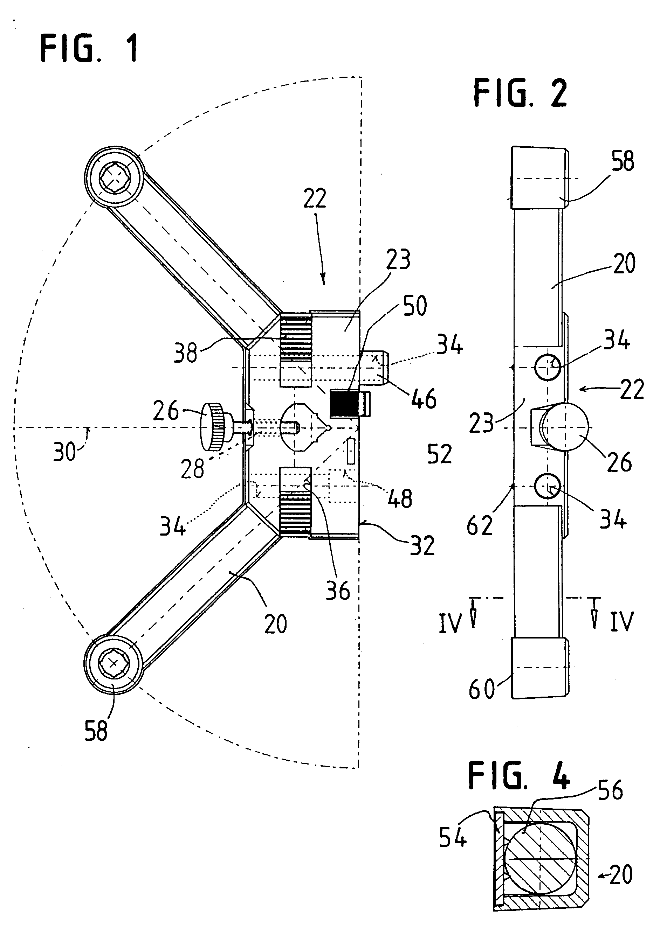

An den freien Endes jedes Stützarmes 20 befindet sich ein im wesentlichen zylindrisches Teil, dessen Durchmesser etwas größer ist als die Breitenabmessung der sonstigen Bereiche des Stützarms 20. In diesem zylindrischen Teil 58 befindet sich eine Aufnahmebohrung für eine Stativstange, die dort klemmend gehalten wird. Unten ist in das zylindrische Teil 58 ein Gummifuß 60 eingesetzt, der eine Rutschsicherheit bewirkt. Die Gummifüße 60 stehen, wie Fig. 2 zeigt, etwas nach unten vor. In unmittelbarer Nähe der Kontaktflächen 32 springen an der Unterfläche des halben Zentralbereichs 23 zwei Noppen 62 nahezu so weit die Gummifüße 60 vor. Auf ihnen und den Gummifüßen 60 ruht ein separat verwendetes Teilstück auf einer ebenen Unterlage. Werden jedoch zwei Teilstücke zu einem kompletten Stativfuß zusammengesteckt, ruht dieser ausschließlich auf den vier Gummifüßen 60.

## Patentansprüche

1. Stativfuß für Labor-Versuchsaufbauten, insbesondere Schulversuche, mit einem Zentralbereich (22), in dem sich mindestens eine Bohrung (24) für die Aufnahme und das Einspannen einer Stange befindet und von dem sternförmig vier Stützarme (20) wegstehen, dadurch gekennzeichnet, daß der Stativfuß aus zwei baugleichen Teilstücken aufgebaut ist, daß jedes Teilstück zwei Stützarme (20) und einen halben Zentralbereich (23) aufweist, daß jedes Teilstück eine eigene Bohrung (24) für die Aufnahme und das Einspannen einer Stange aufweist, jedes Teilstück eine Kontaktfläche (32) aufweist, die bei vollständig zusammengesetztem Stativfuß die Kontaktfläche des anderen Teilstücks berührt, und daß von dieser Kontaktfläche (32) einerseits ein Zapfen vorspringt und andererseits in der Kontaktfläche (32) eine Erweiterung (48) für die Aufnahme eines Zapfens (46) vorgesehen ist.

2. Stativfuß nach Anspruch 1, dadurch gekennzeichnet, daß in jedem Teilstück mindestens eine, eine Spannstelle aufweisende Durchgangsbohrung (34) ausgebildet ist.

3. Stativfuß nach den Ansprüchen 1 und 2, dadurch gekennzeichnet, daß gleichabständig zu einer Symmetrieebene (30) zwei Durchgangsbohrungen (34) vorgesehen sind, von denen eine durch den Zapfen (46) verläuft und in der anderen die Erweiterung (48) ausgebildet ist.

4. Stativfuß nach einem der Ansprüche 1 bis 3, dadurch gekennzeichnet, daß jeder Durchgangsbohrung (34) ein Klemmhebel (38) zugeordnet ist, der ein Exzenterloch (44) hat.

5. Stativfuß nach Anspruch 1, dadurch gekennzeichnet, daß jedes Teilstück eine vorzugweise in der geometrischen Mitte des halben Zentralbereichs (23) angeordnete und rechtwinklig zu dessen Hauptfläche verlaufende Bohrung (24) aufweist, der eine Gewindebohrung (28) und eine Spannschraube (26) zugeordnet sind.

6. Stativfuß nach Anspruch 1, gekennzeichnet durch eine Zunge (50) mit Rastnase, die quer zur Kontaktfläche (32) vorsteht und durch eine Rastausnehmung (52).

7. Stativfuß nach Anspruch 1, dadurch gekennzeichnet, daß jedes Teilstück im wesentlichen aus einem Körper in Form eines Kunststoff teils aufgebaut ist, der die Stützarme (20) und den halben Zentralbereich (23) ausbildet und nach unten offene Kammern hat.

8. Stativfuß nach Anspruch 1, dadurch gekennzeichnet, daß der Körper im Bereich der Stützarme (20) durch eine eingeschweißte Platte (52) verschlossen ist und daß sich im so abgeschlossenen Bereich ein Block (56) z. B. in Form eines Rundmaterials zur Gewichtserhöhung befindet.

9. Stativfuß nach Anspruch 1, dadurch gekennzeichnet, daß die freien Enden der Stützarme (20) im wesentlichen zylindrische Körper bilden, die eine zentrale Bohrung für die Aufnahme einer Stativstange haben.

10. Stativfuß nach Anspruch 1, dadurch gekennzeichnet, daß in Nähe der Kontaktfläche (32) an der Unterfläche des halben Zentralbereichs (23) mindestens ein Noppen (62) vorsteht.

## Claims

1. Stand leg for experiments, especially laboratory experiments in schools, having a central region (22) in which at least one bore (24) for receiving and clamping a rod is provided and from which four supporting arms (20) protrude in a star-shape arrangement, characterized in that the stand leg is made of two identical portions, that each portion has two supporting legs (20) and a half of the central region, that each protion has its own bore (24) for receiving and clamping a rod, that each portion exhibits a contact face (32), which contacts the corresponding contact face (32) of the other portion if the stand leg is completely assembled, and that on one hand a peg protrudes from the contact face (32) and on the other hand the contact face (32) exhibits a recess (48) for receiving the peg (46).

2. Stand leg according to claim 1, characterized in that in each portion a through hole (34) is provided, which has a clamping device arranged in it.

3. Stand leg according to claims 1 or 2, characterized in that in equal distance to a plane of symmetry (30) two through holes (34) are provided, one of which extends through the peg (46) while the recess (48) is formed in the other.

4. Stand leg according to one of the claims 1 to 3, characterized in that a clamping lever (38) is attached to each through hole (34), which clamping lever (38) has an excentric hole (44).

5. Stand leg according to claim 1, characterized in that each portion has a bore (24) which runs orthogonal to the main face of the half central region (23) and is preferably arranged in the geometric center of the half central region (23) and that a threaded bore (28) and a clamping screw (26) is attached thereto.

6. Stand leg according to claim 1, characterized by a tongue (50) having a snap-in protrusion, which tongue protrudes obliquely to the contact face (32), and by a lock-in recess (52).

7. Stand leg according to claim 1, characterized in that each portion essentially consists of a body made of plastic which body has the supporting legs (20) and the half central region (23) and exhibits recesses open towards the bottom.

8. Stand leg according to claim 1, characterized in that a plate (52) which is fixed by welding closes the body in the area of the supporting legs (20) and that a trunk (56) is lodged in the area closed in that way, e.g. a trunk in form of a round stock, which trunk (56) serves to increase the weight.

9. Stand leg according to claim 1, characterized in that the free ends of the supporting legs (20) are essentially cylindrical bodies and have a central bore (24) for receiving a rod.

10. Stand leg according to claim 1, characterized in that in the vicinity of the contact face (32) at least one knob (62) protrudes from the bottom face of the half central region (23).

## Revendications

1. Pied de support pour des expériences en laboratoire, en particulier pour des essais effectués à l'école, comportant un domaine central (22) où se trouve du moins un trou (24) destiné à loger ainsi qu'à serrer une tringle, et duquel partent quatre bras-supports (20) de manière à former une étoile, caractérisé en ce que le pied de support est construit de deux parties de construction identique, que chacune des deux parties présente deux bras-supports (20) ainsi qu'un demi-domaine central (23), que chacune des deux parties présente de sa part un propre trou (24) destiné à loger et à serrer une tringle, chacune des deux parties présente en sus une surface de contact (32) qui entre en contact avec la surface de contact de l'autre partie lorsque le pied de support est assemblé de manière complète, et en ce que d'un côté un tenon fait saillie de cette surface de contact (32) et que de l'autre côté un évasement (48) est prévu dans la surface de contact (32), qui est destiné à loger le tenon (46).

2. Pied de support selon la revendication 1, caractérisé en ce que dans chacune des deux parties est réalisé du moins un trou de passage (34) présentant un point de serrage.

3. Pied de support selon les revendications 1 et 2, caractérisé en ce que l'on prévoit deux trous de passage (34) se trouvant à distances égales par rapport à un plan de symétrie (30), l'un des trous de passage allant à travers le tenon (46) et dans l'autre trou de passage étant formé l'évasement (48).

4. Pied de support selon l'une des revendications 1 à 3, caractérisé en ce qu'à chacun des trous de passage (34) est associé un levier de serrage (38) qui présente un trou excentrique (44).

5. Pied de support selon la revendication 1, caractérisé en ce que chacune des deux parties présente un trou (24) qui est disposé de préférence au milieu géométrique du demi-domaine central (23) et s'étend de manière rectangulaire par rapport à la surface principale dudit demi-domaine central, à ce trou (24) étant associés un trou fileté (28) ainsi qu'une vis de serrage (26).

6. Pied de support selon la revendication 1, caractérisé par une langue (50) avec un nez d'arrêt qui fait saillie de façon transversale par rapport à la surface de contact (32) ainsi que par un évidement d'arrêt (52).

7. Pied de support selon la revendication 1, caractérisé en ce que chacune des deux parties est pour l'essentiel construite d'un corps en forme d'une pièce en matière plastique, qui forme les bras-supports (20) ainsi que le demi-domaine central (23) et qui présente des chambres ouvertes vers le bas.

8. Pied de support selon la revendication 1, caractérisé en ce que le corps est, dans le domaine des bras-supports (20), fermé par le biais d'une plaque (52) soudée et en ce que dans le domaine fermé ainsi réalisé se trouve un bloc (56) comme par exemple sous forme d'un matériau rond destiné à augmenter le poids.

9. Pied de support selon la revendication 1, caractérisé en ce que les extrémités libres des bras-supports (20) forment pour l'essentiel des corps cylindriques qui présentent un trou central destiné à loger une tringle de support.

10. Pied de support selon la revendication 1, caractérisé en ce que du moins une projection (62) fait salle de la surface inférieure du demi-domaine central (23), à proximité de la surface de contact (32).
